# EUROPEAN PATENT SPECIFICATION

(11) **EP 3 088 221 B1**
(45) Date of publication and mention of the grant of the patent: **08.08.2018**
(21) Application number: 14875033.4
(22) Date of filing: 17.12.2014
(51) Int. Cl.: B60H 1/22, B60H 1/08, B60H 1/32

(54) **AIR CONDITIONING DEVICE FOR VEHICLE**
KLIMAANLAGENSYSTEM FÜR EIN FAHRZEUG
DISPOSITIF DE CLIMATISATION POUR VÉHICULE

(30) Priority: 25.12.2013 JP 2013266818
(43) Date of publication of application: 02.11.2016
(73) Proprietor: Panasonic Intellectual Property Management Co., Ltd., Osaka-shi, Osaka 540-6207 (JP)
(72) Inventor: KURODA, Kentaro, Osaka 540-6207 (JP); KODERA, Yuji, Osaka 540-6207 (JP); TANIGUCHI, Katsuji, Osaka 540-6207 (JP); NODA, Yoshitoshi, Osaka 540-6207 (JP); TATENO, Ichiro, Osaka 540-6207 (JP)
(74) Representative: Schwabe - Sandmair - Marx
(86) International application number: PCT/JP2014/006301
(87) International publication number: WO 2015/098049

(56) References cited:
- WO-A1-2011/162031
- WO-A1-2013/084462
- JP-A- H06 143 974
- JP-A- 2010 159 008
- JP-A- 2010 260 449
- JP-A- 2013 139 252
- JP-U- H0 668 919
- US-A1- 2005 039 878

## Description

### TECHNICAL FIELD

The present disclosure relates to an air conditioning device for a vehicle.

### BACKGROUND

A conventional heating device for a vehicle is often constituted by a hot water heater which heats a vehicle interior by utilizing a high-temperature engine coolant.

PTL 1 discloses an air conditioning device for a vehicle developed from an existing hot water heater. This air conditioning device for a vehicle additionally includes a structure for heating a coolant of a hot water heater by utilizing a heat pump to achieve higher heating performance than the existing hot water heater. According to the air conditioning device for a vehicle disclosed in PTL 1, a coolant for cooling an engine is configured to pass through a condenser, a heater core, and an evaporator in this order as a serial flow. The coolant having passed through these components is again introduced into the engine. The air conditioning device for a vehicle disclosed in PTL 1 further heats the engine coolant at the condenser by utilizing a refrigerant discharged from a compressor to improve heating performance. Other examples are disclosed in PT2 and PT3.

### Citation List

### Patent Literature

PTL 1: Unexamined Japanese Patent Publication No. 10-76837
PTL 2: JPH0668919U.
PTL 3: US2005039878.

### SUMMARY

The present invention provides an air conditioning device for a vehicle, which is an air-conditioning device capable of suppressing a rise of discharge pressure from a compressor to improve heating performance. According to the invention the air conditioning device for a vehicle includes all the features of claim 1. According to this structure, since the first flow rate adjusting unit is capable of supplying an engine coolant to the bypass route, the engine coolant flowing through the first water-refrigerant heat exchanger can be reduced, and heat exchange effectiveness between the engine coolant and the refrigerant at the first water-refrigerant heat exchanger can be decreased accordingly. As a result, the refrigerant pressure lowers to a level of suppressing a rise of the discharge pressure of a compressor. This suppression of a rise in the discharge pressure lowers a ratio of OFF control of the compressor. In other words, a ratio of ON control of the compressor increases. Accordingly, heating performance can be improved.

### BRIEF DESCRIPTION OF DRAWINGS

FIG. 1 is a configuration diagram illustrating an air conditioning device for a vehicle according to an exemplary embodiment of the present invention.
FIG. 2 is a diagram for describing operation in a cooling mode of the air conditioning device for a vehicle illustrated in FIG. 1.
FIG. 3 is a diagram for describing operation in a heat pump heating mode of the air conditioning device for a vehicle illustrated in FIG. 1.
FIG. 4 is a block diagram illustrating an air conditioner ECU (Electronic Control Unit), and a configuration around the air conditioner ECU of the air conditioning device for a vehicle illustrated in FIG. 1.
FIG. 5 is a flowchart for describing operation of the air conditioner ECU illustrated in FIG. 4.
FIG. 6 is a diagram for describing Modified Example 1 of the air conditioning device for a vehicle according to the exemplary embodiment of the present invention.
FIG. 7 is a diagram for describing Modified Example 2 of the air conditioning device for a vehicle according to the exemplary embodiment of the present invention.
FIG. 8 is a diagram for describing Modified Example 3 of the air conditioning device for a vehicle according to the exemplary embodiment of the present invention.
FIG. 9 is a flowchart for describing Modified Example 4 of the air conditioning device for a vehicle according to the exemplary embodiment of the present invention.

### DESCRIPTION OF EMBODIMENT

Before describing an exemplary embodiment of the present invention, problems of a conventional air conditioning device for a vehicle are touched upon. According to the conventional air conditioning device for a vehicle, a compressor is controlled to be turned off when pressure of a refrigerant discharged from the compressor (discharge pressure) reaches a predetermined pressure. This control prevents a rise of the discharge pressure to protect the compressor. There is a correlation between a temperature of an engine coolant and the discharge pressure of the compressor. More specifically, the discharge pressure of the compressor increases as the temperature of the engine coolant becomes higher. According to the air conditioning device for a vehicle disclosed in PTL 1, therefore, the compressor needs to be turned off when the discharge pressure of the compressor increases as a result of a rise of the temperature of the coolant. This OFF-state of the compressor causes a limitation on the heating performance.

Respective examples according to the present invention are hereinafter described with reference to the drawings.

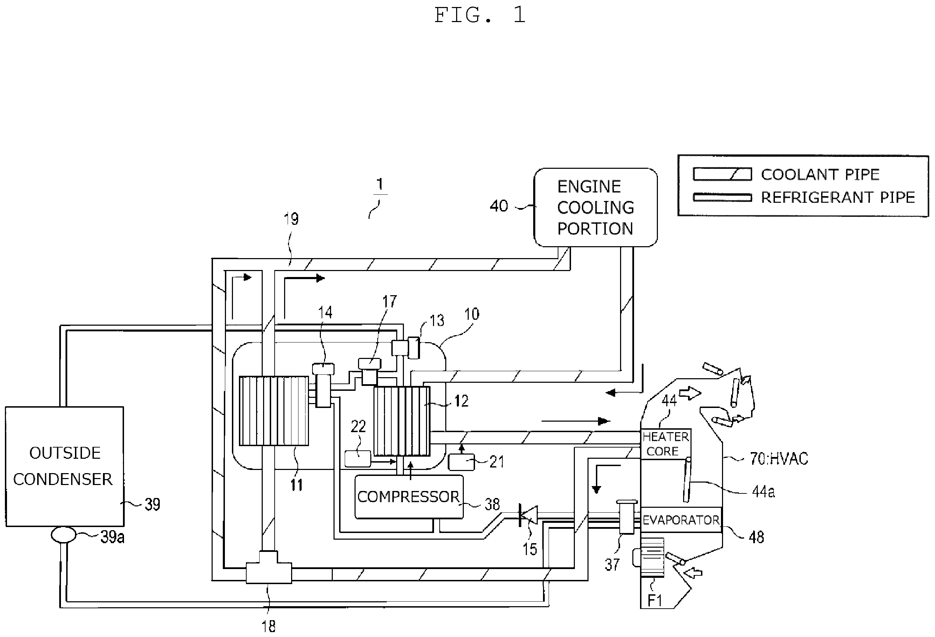

FIG. 1 is a configuration diagram illustrating air conditioning device for a vehicle 1 according to an exemplary embodiment of the present invention. Air conditioning device for a vehicle 1 is mounted on a vehicle including an engine (internal combustion engine) corresponding to a heat generating component, and performs air conditioning in a vehicle interior.

Air conditioning device for a vehicle 1 includes constituent unit 10, compressor 38, engine cooling portion 40, heater core 44, evaporator 48, expansion valve 37, outside condenser 39, check valve 15, three-way valve 18 (corresponding to a first flow rate adjusting unit), coolant pipe and refrigerant pipe connecting these components, and others. Heater core 44 and evaporator 48 are disposed within an intake air path of HVAC (Heating, Ventilation, and Air Conditioning) 70. HVAC 70 includes fan F1 for generating a flow of intake air.

Compressor 38 is driven electrically or by power of the engine to compress a sucked refrigerant into a high-temperature and high-pressure refrigerant, and discharge the compressed refrigerant. The compressed refrigerant is supplied to constituent unit 10. Compressor 38 sucks a low-pressure refrigerant via a junction pipe from first water-refrigerant heat exchanger 11 of constituent unit 10 or evaporator 48.

Engine cooling portion 40 includes a water jacket for supplying a coolant to an area around the engine, and a pump for supplying a coolant to the water jacket. Engine cooling portion 40 releases heat from the engine toward the coolant flowing in the water jacket. The pump is rotated by power of the engine, for example. Engine cooling portion 40 may include a radiator which radiates heat to the outside when an amount of exhaust heat from the engine increases. A coolant path of engine cooling portion 40 (engine coolant path 19) passes through constituent unit 10, and communicates with heater core 44.

The engine coolant is an antifreezing liquid, such as LLC (long Life Coolant), which functions as a liquid for transferring heat.

The structure for transferring an engine coolant may be constituted by the pump of engine cooling portion 40 alone. This structure reduces costs of the device and a space required for installation of the device. An additional pump may be provided at another position of the coolant pipe to improve engine coolant transfer capability.

Heater core 44 is a device which performs heat exchange between an engine coolant and air, and is disposed in the intake air path of HVAC 70 provided to supply air to the vehicle interior. Heater core 44 receives a heated engine coolant, and releases the heat of the engine coolant to intake air to be supplied to the vehicle interior (air blowing to the vehicle interior) during heating operation. Heater core 44 can adjust an amount of passing air by varying an opening of door 44a. Door 44a can be electrically controlled to open and close. Door 44a is called a mix door as well.

Evaporator 48 is a device which performs heat exchange between a low-temperature and low-pressure refrigerant and air, and disposed in the intake air path of HVAC 70. Evaporator 48 receives a flow of a low-temperature and low-pressure refrigerant during cooling operation or dehumidifying operation, and cools intake air to be supplied to the vehicle interior (air blowing to the vehicle interior).

Expansion valve 37, which is corresponding to a second expansion unit, expands a high-pressure refrigerant into a low-temperature and low-pressure refrigerant, and discharges the expanded refrigerant to evaporator 48. Expansion valve 37 is disposed in the vicinity of evaporator 48. Expansion valve 37 may have a function of automatically adjusting a discharge amount of a refrigerant in accordance with a temperature of a refrigerant delivered from evaporator 48.

Outside condenser 39 includes a path for a flow of a refrigerant and a path for a flow of air. Outside condenser 39 is disposed in the vicinity of a head of the vehicle inside an engine room, for example, to perform heat exchange between a refrigerant and the outside air. Outside condenser 39 receives a flow of a high-temperature and high-pressure refrigerant in a cooling mode and a dehumidification mode, and discharges heat from the refrigerant to the outside air. Outside condenser 39 receives a blow of the outside air from a fan, for example. Reservoir tank 39a may be provided on a refrigerant delivery side of outside condenser 39.

A refrigerant having passed through outside condenser 39 is introduced into evaporator 48 via expansion valve 37.

An engine coolant discharged from engine cooling portion 40 passes through engine coolant path 19, and enters constituent unit 10. The engine coolant having passed through constituent unit 10 flows through heater core 44, and enters three-way valve 18.

Three-way valve 18 switches between a state in which an engine coolant discharged from heater core 44 and flowing through engine coolant path 19 is supplied to a flow path connecting with first water-refrigerant heat exchanger 11 included in constituent unit 10 described below, and a state in which this engine coolant is supplied to a flow path bypassing first water-refrigerant heat exchanger 11.

Three-way valve 18 is capable of adjusting a flow rate of an engine coolant supplied to first water-refrigerant heat exchanger 11, and a flow rate of an engine coolant supplied to the flow path bypassing first water-refrigerant heat exchanger 11. For example, all amount of an engine coolant may be supplied to the flow path connecting with first water-refrigerant heat exchanger 11. Alternatively, a part amount of the engine coolant may be supplied to the flow path connecting with first water-refrigerant heat exchanger 11, while the remaining amount of the engine coolant may be supplied to the flow path bypassing first water-refrigerant heat exchanger 11. Three-way valve 18 may supply all amount of the introduced engine coolant to the flow path bypassing first water-refrigerant heat exchanger 11.

Constituent unit 10 has an integrated structure manufactured as a single unit at a factory. Constituent unit 10 is connected with other components of air conditioning device for a vehicle 1 via pipe in an assembly step of the vehicle. Respective constituent elements of constituent unit 10 may be contained within a single housing to be integrated with one another, or joined to one another to be integrated.

Constituent unit 10 includes first water-refrigerant heat exchanger 11, second water-refrigerant heat exchanger 12, ON-OFF valve (corresponding to first switching unit) 13, expansion valve 14 (corresponding to first expansion unit), and ON-OFF valve 17 (corresponding to first switching unit).

First water-refrigerant heat exchanger 11 (evaporator) includes a path for a flow of a low-temperature and low-pressure refrigerant, and a path for a flow of a coolant, and performs heat exchange between a refrigerant and a coolant. First water-refrigerant heat exchanger 11 receives a low-temperature and low-pressure refrigerant discharged from expansion valve 14 in a predetermined operation mode, and transfers heat from a coolant to the low-temperature and low-pressure refrigerant. As a result, the low-temperature and low-pressure refrigerant is vaporized by first water-refrigerant heat exchanger 11.

A coolant introduction port of first water-refrigerant heat exchanger 11 communicates with heater core 44 via three-way valve 18, while a coolant delivery port of first water-refrigerant heat exchanger 11 communicates with an introduction port of engine cooling portion 40 via engine coolant path 19.

A refrigerant introduction port of first water-refrigerant heat exchanger 11 communicates with expansion valve 14 via pipe, while a refrigerant delivery port of first water-refrigerant heat exchanger 11 communicates with pipe joined to an intake port of compressor 38.

Second water-refrigerant heat exchanger 12 (condenser) includes a path for a flow of a high-temperature and high-pressure refrigerant, and a path for a flow of a coolant, and performs heat exchange between a refrigerant and a coolant. Second water-refrigerant heat exchanger 12 receives a high-temperature and high-pressure refrigerant from compressor 38 in an operation mode in which a temperature of an engine coolant is low, and releases heat from the high-temperature and high-pressure refrigerant to the coolant. Second water-refrigerant heat exchanger 12 condenses a high-temperature and high-pressure refrigerant when a coolant has a low temperature.

A coolant introduction port of second water-refrigerant heat exchanger 12 communicates with a discharge port of engine cooling portion 40 via engine coolant path 19. A coolant delivery port of second water-refrigerant heat exchanger 12 communicates with an introduction port of heater core 44 via engine coolant path 19. A refrigerant introduction port of second water-refrigerant heat exchanger 12 communicates with a discharge port of compressor 38 via pipe. A refrigerant delivery port of second water-refrigerant heat exchanger 12 communicates with ON-OFF valve 17 and expansion valve 14 via branch pipe, and communicates with outside condenser 39 via branch pipe and ON-OFF valve 13. Accordingly, the refrigerant path extending from second water-refrigerant heat exchanger 12 to first water-refrigerant heat exchanger 11 is different from the refrigerant path extending from outside condenser 39 to evaporator 48.

Each of ON-OFF valve 13 and ON-OFF valve 17 is a valve for switching opening and closing of refrigerant pipe under electric control, for example. Each of ON-OFF valve 13 and ON-OFF valve 17 is constituted by a solenoid valve, for example. Each of ON-OFF valve 13 and ON-OFF valve 17 corresponds to the first switching unit which switches between a state in which a refrigerant discharged from second water-refrigerant heat exchanger 12 is supplied to evaporator 48, and a state in which this refrigerant is supplied to first water-refrigerant heat exchanger 11.

In an open state of ON-OFF valve 13 and a close state of ON-OFF valve 17, a refrigerant is only supplied to evaporator 48. In an open state of ON-OFF valve 17 and a close state of ON-OFF valve 13, a refrigerant is only supplied to first water-refrigerant heat exchanger 11.

Expansion valve 14 is a valve functioning as an expansion valve for expanding a high-pressure refrigerant into a low-temperature and low-pressure refrigerant.

Check valve 15 is a valve provided between compressor 38 and evaporator 48 to prevent a backward flow of a refrigerant during an operation mode for generating no flow of a refrigerant at outside condenser 39 and evaporator 48. Consideration is now given to such an operation mode in which a refrigerant is supplied to a refrigerant circuit passing through first water-refrigerant heat exchanger 11 and second water-refrigerant heat exchanger 12 in the close state of ON-OFF valve 13 and the open state of ON-OFF valve 17. ON-OFF valve 13 is closed in this operation mode, wherefore a refrigerant circuit passing through outside condenser 39 and evaporator 48 is cut off. In this case, however, refrigerant pressure at outside condenser 39 and evaporator 48 may decrease when the temperature of the outside air is low. This pressure drop may cause a backward flow of a refrigerant flowing in the refrigerant circuit of first water-refrigerant heat exchanger 11 and second water-refrigerant heat exchanger 12 toward the refrigerant circuit on an evaporator 48 side. As a result, an amount of a refrigerant in the refrigerant circuit passing through first water-refrigerant heat exchanger 11 and second water-refrigerant heat exchanger 12 deviates from an optimal range. Consequently, heat pump cycle efficiency may lower in such a condition. However, this problem is avoidable by providing check valve 15.

Operation of air conditioning device for a vehicle 1 is hereinafter described.

Air conditioning device for a vehicle 1 operates in an operation mode switched among several modes including a hot water heating mode, a heat pump heating mode, a temperature control mode, and a cooling mode. The hot water heating mode is a mode for heating the vehicle interior without operating the heat pump. The heat pump heating mode is a mode for heating the vehicle interior by operating the heat pump. The cooling mode is a mode for cooling the vehicle interior by operation of the heat pump. The temperature control mode is adoptable to adjust air temperature and humidity by an appropriate combination of air cooling and dehumidification utilizing a low-temperature refrigerant, and air heating utilizing a high-temperature coolant. The cooling mode is initially described.

### [Cooling Mode]

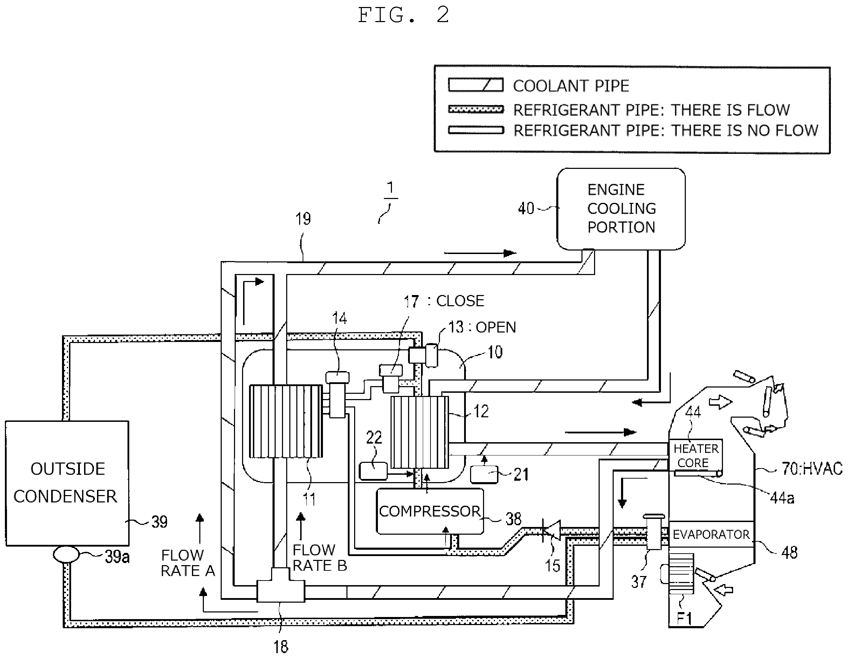

FIG. 2 is a diagram for describing operation in the cooling mode. During the cooling mode, ON-OFF valve 13 is opened, while ON-OFF valve 17 is closed. Door 44a of heater core 44 is fully closed.

Compressor 38 is operated to allow a refrigerant to circulate through second water-refrigerant heat exchanger 12, outside condenser 39, expansion valve 37, evaporator 48, and compressor 38 in this order.

In the cooling mode, three-way valve 18 (first flow rate adjusting unit) is switched such that an engine coolant discharged from heater core 44 and flowing in engine coolant path 19 is supplied to a route bypassing first water-refrigerant heat exchanger 11.

Herein, as illustrated in FIG. 2, a flow rate of an engine coolant flowing from three-way valve 18 to the flow path bypassing first water-refrigerant heat exchanger 11 is referred to as flow rate A, and a flow rate of an engine coolant flowing from three-way valve 18 to the flow path guided toward first water-refrigerant heat exchanger 11 is referred to as flow rate B. Three-way valve 18 can arbitrarily distribute the introduced engine coolant into flow rate A and flow rate B. During the cooling mode, it is preferable that three-way valve 18 supplies all amount of the introduced engine coolant to the flow path bypassing first water-refrigerant heat exchanger 11. In other words, it is preferable that flow rate A is set to a rate at which all amount of the engine coolant flows, and that flow rate B is set to zero.

In this case, the engine coolant flowing in engine coolant path 19 is not cooled due to bypassing. Accordingly, the temperature of the engine coolant is relatively high. Heat release from the coolant is chiefly achieved by the radiator of engine cooling portion 40. Since the engine has an extremely high temperature, appropriate cooling can be achieved by radiation from the radiator even when a temperature of the outside air is high. The structure for supplying a coolant may be designed to increase a flow of a coolant on a radiator side and to decrease a flow of a coolant on a heater core 44 side.

According to this structure, since a coolant at second water-refrigerant heat exchanger 12 has a high temperature, a high-temperature and high-pressure refrigerant at second water-refrigerant heat exchanger 12 does not release a large amount of heat. However, the high-temperature and high-pressure refrigerant is subsequently supplied to outside condenser 39, and condensed by releasing heat to the air.

The condensed refrigerant is supplied toward an evaporator 48, and expanded into a low-temperature and low-pressure refrigerant by expansion valve 37 in an initial stage. The low-temperature and low-pressure refrigerant at evaporator 48 cools the air to be supplied to the vehicle interior. The refrigerant is vaporized by this heat exchange. The vaporized low-pressure refrigerant is sucked and compressed by compressor 38.

A coolant flowing through second water-refrigerant heat exchanger 12, heater core 44, and first water-refrigerant heat exchanger 11 has a high temperature. However, a heat amount released from the refrigerant to the intake air to be supplied to the vehicle interior is kept small under control of opening of door 44a of heater core 44.

The foregoing operation achieves sufficient cooling in the vehicle interior.

### [Heat Pump Heating Mode]

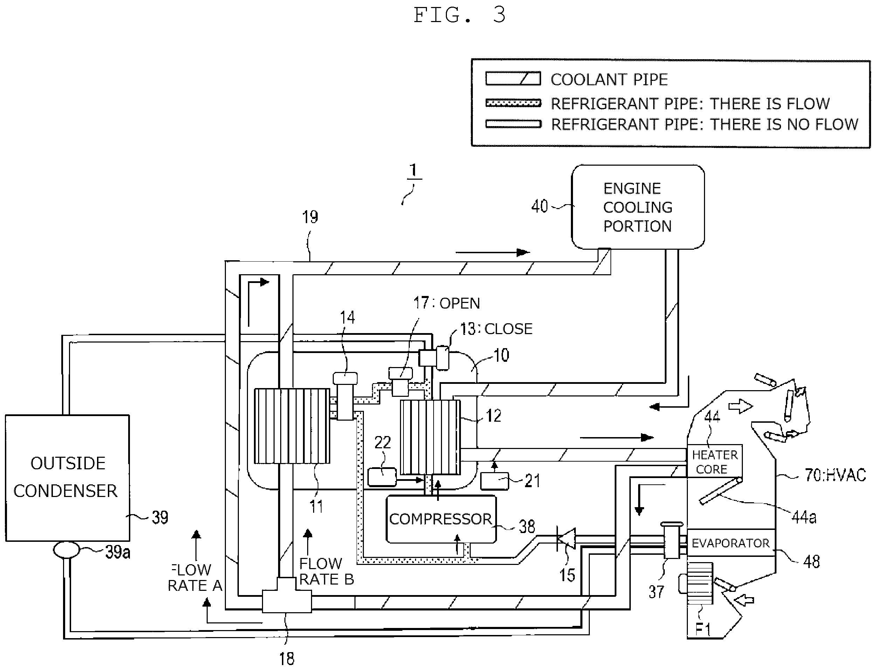

The heat pump heating mode is hereinafter described. FIG. 3 is a diagram for describing operation in the heat pump heating mode. The heat pump heating mode is a mode for supplying a refrigerant to both first water-refrigerant heat exchanger 11 and second water-refrigerant heat exchanger 12. In the heat pump heating mode, ON-OFF valve 13 is closed, while ON-OFF valve 17 is opened as illustrated in FIG. 3. Door 44a of heater core 44 is opened.

Compressor 38 is operated to allow a refrigerant to circulate through second water-refrigerant heat exchanger 12, expansion valve 14, first water-refrigerant heat exchanger 11, and compressor 38 in this order.

A high-temperature and high-pressure refrigerant compressed by compressor 38 releases heat to a coolant and condenses at second water-refrigerant heat exchanger 12. The condensed refrigerant is expanded by expansion valve 14 into a low-temperature and low-pressure refrigerant, and supplied to first water-refrigerant heat exchanger 11. The low-temperature and low-pressure refrigerant vaporizes by absorbing heat from a coolant at first water-refrigerant heat exchanger 11. The vaporized low-pressure refrigerant is sucked and compressed by compressor 38.

A coolant discharged from engine cooling portion 40 circulates through second water-refrigerant heat exchanger 12, heater core 44, and first water-refrigerant heat exchanger 11 in this order, and returns to engine cooling portion 40.

The coolant having absorbed heat from the engine at engine cooling portion 40 is further heated by second water-refrigerant heat exchanger 12, and supplied to heater core 44. The high-temperature coolant supplied to heater core 44 can sufficiently heat intake air to be supplied to the vehicle interior.

In the heat pump heating mode, an engine coolant discharged from heater core 44 and flowing in engine coolant path 19 is distributed by three-way valve 18 into the flow path guided toward first water-refrigerant heat exchanger 11, and the flow path bypassing first water-refrigerant heat exchanger 11.

The engine coolant flowing in the flow path guided toward first water-refrigerant heat exchanger 11 releases heat to a refrigerant at first water-refrigerant heat exchanger 11 to vaporize the refrigerant by the released heat. The engine coolant cooled at first water-refrigerant heat exchanger 11 can be supplied to engine cooling portion 40 to sufficiently cool the engine.

Herein, as illustrated in FIG. 3, a flow rate of an engine coolant flowing from three-way valve 18 to a flow path bypassing first water-refrigerant heat exchanger 11 is referred to as flow rate A, and a flow rate of an engine coolant flowing from three-way valve 18 to a flow path guided toward first water-refrigerant heat exchanger 11 is referred to as flow rate B. Three-way valve 18 may supply all amount of the introduced engine coolant to first water-refrigerant heat exchanger 11 (flow rate A = 0), or may supply a part of the engine coolant to the bypass route (flow rate A ≠ 0, and flow rate B ≠ 0). Three-way valve 18 may supply all amount of the introduced engine coolant to the flow path bypassing first water-refrigerant heat exchanger 11 (flow rate B = 0). Flow rate A is determined based on a refrigerant discharge pressure of compressor 38 or other conditions as described below.

In the heat pump heating mode, it is preferable that the engine coolant supplied to first water-refrigerant heat exchanger 11 does not become zero (flow rate B = 0). When heat exchange between a refrigerant and an engine coolant is stopped at first water-refrigerant heat exchanger 11, cycle balance of the heat pump may be lost.

The foregoing operation achieves sufficient heating in the vehicle interior.

### [Functional Configuration around Air Conditioner ECU]

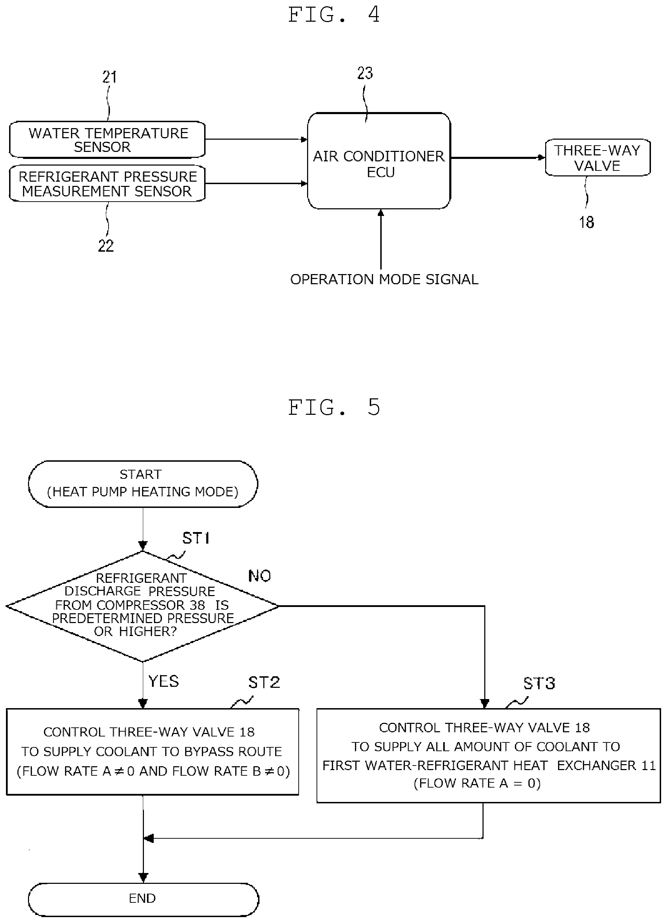

FIG. 4 is a block diagram illustrating air conditioner ECU (Electronic Control Unit) 23 (corresponding to control unit), and a configuration around air conditioner ECU 23 of air conditioning device for a vehicle 1 according to an exemplary embodiment of the present invention. Air conditioner ECU 23 receives an operation mode signal from a upper-level ECU (not-shown), as a signal indicating an operation mode such as the hot water heating mode, the heat pump heating mode, the temperature control mode, and the cooling mode. This operation mode signal may be received not from the upper-level ECU, but directly through operation of an air conditioner control switch operated by a user as an operation mode signal.

Water temperature sensor 21 (corresponding to a water temperature measurement unit) is disposed in engine coolant path 19 in the vicinity of a discharge port of second water-refrigerant heat exchanger 12 to measure a temperature of an engine coolant and output a measurement result to air conditioner ECU 23. Water temperature sensor 21 may be disposed in engine coolant path 19 in the vicinity of an introduction port of second water-refrigerant heat exchanger 12 to measure the temperature of the engine coolant. On the other hand, refrigerant pressure measurement sensor 22 (corresponding to a refrigerant pressure measurement unit) measures a pressure of a high-temperature and high-pressure refrigerant discharged from compressor 38, and outputs a measurement result to air conditioner ECU 23.

Water temperature sensor 21 and refrigerant pressure measurement sensor 22 may be provided either inside constituent unit 10, or outside constituent unit 10. Similarly, air conditioner ECU 23 may be provided either inside constituent unit 10, or outside constituent unit 10.

Air conditioner ECU 23 controls three-way valve 18 (first flow rate adjusting unit) based on the operation mode signal, and measurement results obtained from water temperature sensor 21 and refrigerant pressure measurement sensor 22.

### [Operation of Air Conditioner ECU]

Operation of air conditioner ECU 23 in the heat pump heating mode is hereinafter described. FIG. 5 is a flowchart showing operation of air conditioner ECU 23 when the operation mode signal designates the heating mode.

In step ("step" is hereinafter abbreviated as "ST") 1 in FIG. 5, air conditioner ECU 23 determines whether or not the refrigerant discharge pressure from compressor 38 is a predetermined pressure or higher. When the refrigerant discharge pressure is the predetermined pressure or higher (YES in determination result in ST1), air conditioner ECU 23 controls three-way valve 18 to supply a part of engine coolant to the bypass route, and supply the remaining engine coolant to first water-refrigerant heat exchanger 11 (ST2). More specifically, air conditioner ECU 23 performs control for producing a state in which flow rate A ≠ 0 and flow rate B ≠ 0.

It is preferable in ST2 that the flow rate of the engine coolant supplied not to the bypass route but to first water-refrigerant heat exchanger 11 (flow rate B) does not become zero under the control by air conditioner ECU 23. When heat exchange between a refrigerant and an engine coolant is stopped at first water-refrigerant heat exchanger 11, cycle balance of the heat pump may be lost.

Air conditioner ECU 23 may control to increase flow rate A in accordance with a rise of the refrigerant discharge pressure during control for producing a state in which flow rate A ≠ 0 and flow rate B ≠ 0 in ST2. By increasing the engine coolant supplied to the bypass route, further reduction of the refrigerant discharge pressure is achievable in the condition of the rise of the refrigerant discharge pressure.

When the determination result is NO in ST1, i.e., when the refrigerant discharge pressure of compressor 38 is lower than the predetermined pressure, air conditioner ECU 23 controls three-way valve 18 to supply all amount of the engine coolant not to the bypass route, but to first water-refrigerant heat exchanger 11. More specifically, air conditioner ECU 23 controls three-way valve 18 to set flow rate A to zero, and to supply all amount of the engine coolant introduced into three-way valve 18 to first water-refrigerant heat exchanger 11 (flow rate A = 0) (ST3).

Processing of air conditioner ECU 23 returns to the step of START after processing has reached to the end (END in FIG. 5).

Accordingly, when a pressure of a high-temperature and high-pressure refrigerant discharged from compressor 38, which compresses and discharges a refrigerant, is a predetermined pressure or higher, air conditioner ECU 23 controls three-way valve 18 (first flow rate adjusting unit) to supply an engine coolant to the path bypassing first water-refrigerant heat exchanger 11.

As described above, air conditioning device for a vehicle 1 in this exemplary embodiment has a basic structure constituted by both a structure of a hot water heater which supplies an engine coolant to heater core 44 for heating, and a structure of a heat pump cooling device which uses a low-temperature and low-pressure refrigerant of a heat pump for cooling. Adding constituent unit 10 to this basic structure can achieve heating in the vehicle interior by utilizing the heat pump. This structure realizes prompt heating in the vehicle interior by utilizing operation of the heat pump even at a low temperature of the engine.

According to this exemplary embodiment, three-way valve 18 (first flow rate adjusting unit) is capable of supplying an engine coolant to the bypass route to reduce the engine coolant flowing through first water-refrigerant heat exchanger 11, and decrease heat exchange effectiveness between the engine coolant and the refrigerant at first water-refrigerant heat exchanger 11 accordingly. As a result, the refrigerant pressure lowers to a level of reducing a rise of the discharge pressure of compressor 38.

This reduction of a rise of the discharge pressure can lower a ratio of OFF control of compressor 38. In other words, a ratio of ON control of compressor 38 can increase. Accordingly, excellent heating performance is realizable according to the present invention. The description of the exemplary embodiment of the present invention is now completed. Described hereinafter are various modified examples of the air conditioning device for a vehicle according to the exemplary embodiment of the present invention.

### [Modified Example 1]

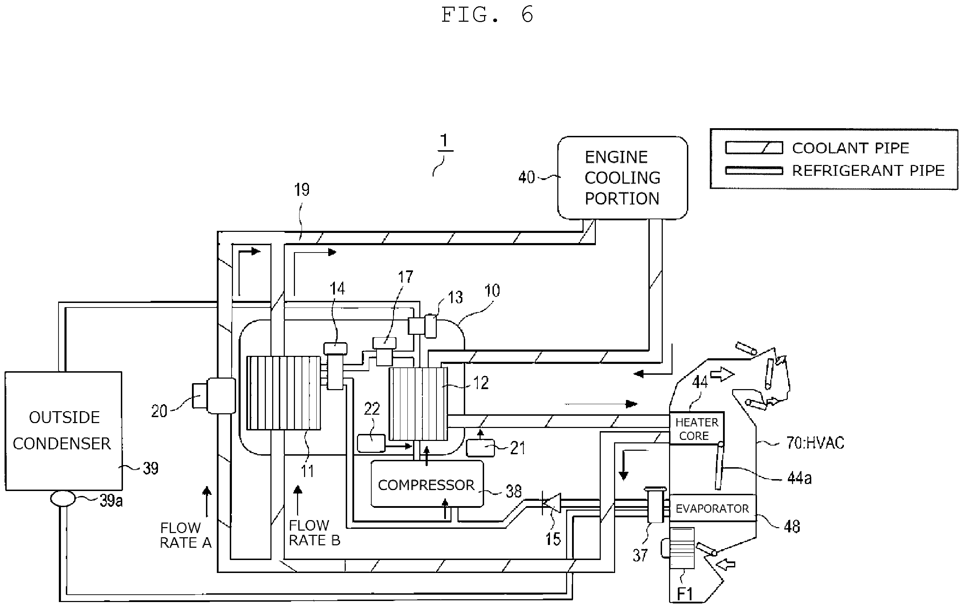

According to a modified example of the first flow rate adjusting unit, in place of the use of three-way valve 18, a function equivalent to the function of three-way valve 18 is performed by solenoid valve 20 disposed in a flow path of engine coolant path 19 for bypassing first water-refrigerant heat exchanger 11 as illustrated in FIG. 6. As opening of solenoid valve 20 increases, flow rate A increases. On the other hand, flow rate B decreases with increase in the opening of solenoid valve 20. Accordingly, flow rate A and flow rate B are adjustable by solenoid valve 20.

### [Modified Example 2]

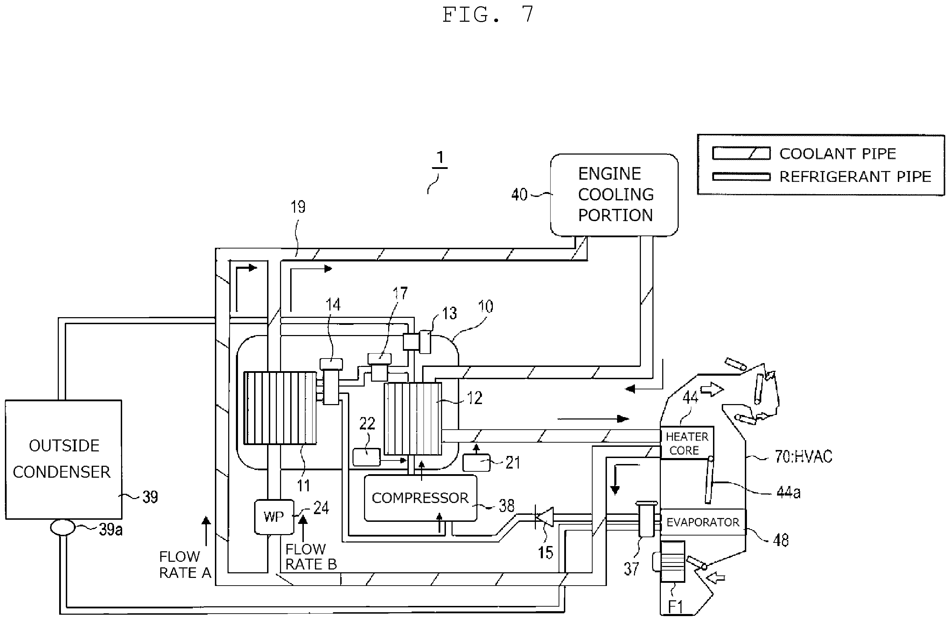

According to another modified example of the first flow rate adjusting unit, in place of the use of three-way valve 18, a function equivalent to the function of three-way valve 18 is performed by water pump (WP) 24 disposed in a flow path of engine coolant path 19 toward first water-refrigerant heat exchanger 11 as illustrated in FIG. 7. Flow rate A decreases as flow rate B increases by operation of water pump 24. Accordingly, flow rate A and flow rate B are adjustable by water pump 24.

### [Modified Example 3]

According to the exemplary embodiment described above, an engine coolant discharged from engine cooling portion 40 passes through second water-refrigerant heat exchanger 12, heater core 44, and first water-refrigerant heat exchanger 11 in this order, and then enters engine cooling portion 40. However, the engine coolant may flow in a different order.

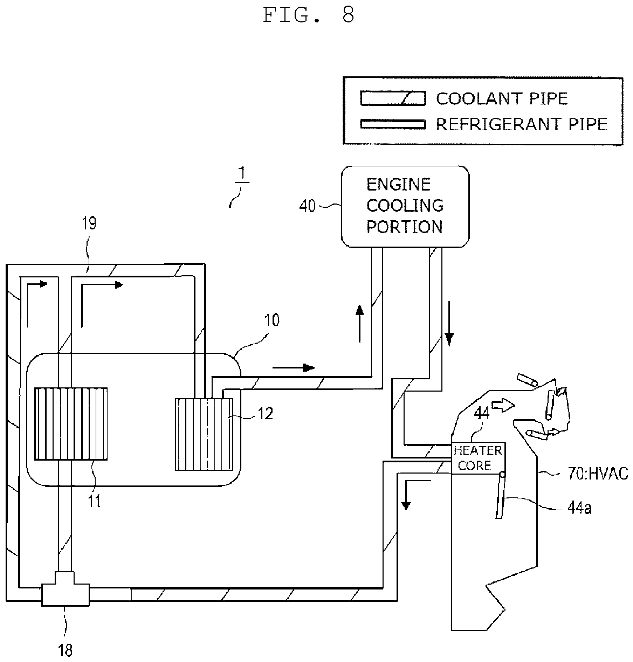

FIG. 8 is a diagram for describing a modified example in which the order of second water-refrigerant heat exchanger 12, heater core 44, and first water-refrigerant heat exchanger 11 is changed. FIG. 8 does not show the flow path of a refrigerant. For example, an engine coolant discharged from engine cooling portion 40 may pass through heater core 44, first water-refrigerant heat exchanger 11, and second water-refrigerant heat exchanger 12 in this order, and then enter engine cooling portion 40 as illustrated in FIG. 8. Advantageous effects similar to the advantageous effects of the foregoing exemplary embodiment are obtained even when the order of heater core 44, first water-refrigerant heat exchanger 11, and second water-refrigerant heat exchanger 12 is switched as in this example.

### [Modified Example 4]

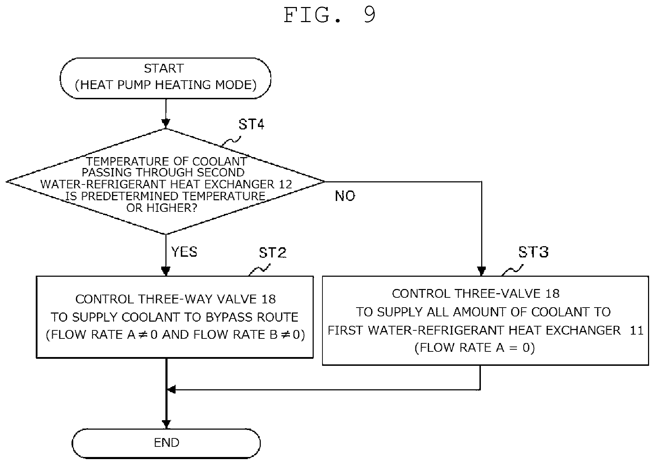

According to the exemplary embodiment discussed above with reference to FIG. 5, flow rate A and flow rate B are determined based on the refrigerant discharge pressure of compressor 38. However, flow rate A and flow rate B may be determined based on a water temperature detected by water temperature sensor 21 as illustrated in FIG. 9. This structure is adoptable based on a high correlation between the water temperature detected by water temperature sensor 21 and the refrigerant discharge pressure of compressor 38.

As illustrated in FIG. 9, air conditioner ECU 23 controls three-way valve 18 (first flow rate adjusting unit) to supply a part of an engine coolant to the bypass route, and the remaining engine coolant to first water-refrigerant heat exchanger 11 (ST2) when the water temperature detected by water temperature sensor 21 is a predetermined temperature or higher (YES in ST4) during the heat pump heating mode. More specifically, air conditioner ECU 23 performs control for producing a state in which flow rate A ≠ 0 and flow rate B ≠ 0.

It is preferable that the flow rate of an engine coolant supplied not to the bypass route but to first water-refrigerant heat exchanger 11 (flow rate B) does not become zero by the control performed by air conditioner ECU 23 in ST2. When heat exchange between a refrigerant and an engine coolant is stopped at first water-refrigerant heat exchanger 11, cycle balance of the heat pump may be lost.

Air conditioner ECU 23 may control to increase flow rate A in accordance with a rise of the water temperature detected by water temperature sensor 21 during control for producing a state in which flow rate A ≠ 0 and flow rate B ≠ 0 in ST2. By increasing the engine coolant supplied to the bypass route, further reduction of the refrigerant discharge pressure is achievable.

When a temperature of an engine coolant passing through second water-refrigerant heat exchanger 12 is lower than a predetermined temperature (NO in ST4), air conditioner ECU 23 controls three-way valve 18 to supply all amount of the engine coolant not to the bypass route, but to first water-refrigerant heat exchanger 11. More specifically, air conditioner ECU 23 controls three-way valve 18 to set flow rate A to zero (flow rate A = 0), and to supply all amount of the engine coolant introduced into three-way valve 18 to first water-refrigerant heat exchanger 11 (ST3).

### [Other Modified Examples]

According to the exemplary embodiment described above, three-way valve 18 is disposed outside constituent unit 10. However, three-way valve 18 may be provided within constituent unit 10.

According to the exemplary embodiment described above, the first flow rate adjusting unit is constituted by three-way valve 18. However, the function of three-way valve 18 may be realized by a plurality of ON-OFF valves disposed at the branch portion of the refrigerant pipe.

According to the exemplary embodiment described above, the first switching unit is constituted by ON-OFF valve 13 and ON-OFF valve 17. However, the first switching unit may be realized by a three-way valve disposed at the branch portion of the refrigerant pipe.

According to the exemplary embodiment described above, expansion valve 14 and ON-OFF valve 17 are constituted by separate components. However, an expansion valve equipped with a solenoid valve may be adopted as a unit integrally including expansion valve 14 and ON-OFF valve 17. This expansion valve equipped with a solenoid valve is a valve capable of switching opening and closing of refrigerant pipe under electric control, and functioning as an expansion valve when the refrigerant pipe is opened.

### INDUSTRIAL APPLICABILITY

The present invention is applicable to an air-conditioning device for an engine vehicle, an electric vehicle, an HEV (Hybrid Electric Vehicle), or various other types of vehicles.

### REFERENCE MARKS IN THE DRAWINGS

1 Air conditioning device for a vehicle
10 Constituent unit
11 First water-refrigerant heat exchanger
12 Second water-refrigerant heat exchanger
13 ON-OFF valve (first switching unit)
14 Expansion valve
15 Check valve
17 ON-OFF valve (first switching unit)
18 Three-way valve (first flow rate adjusting unit)
19 Engine coolant path
20 Solenoid valve (first flow rate adjusting unit)
21 Water temperature sensor (water temperature measurement unit)
22 Refrigerant pressure measurement sensor (refrigerant pressure measurement unit)
23 Air conditioner ECU (control unit)
24 Water pump (first flow rate adjusting unit)
37 Expansion valve
38 Compressor
39 Outside condenser
40 Engine cooling portion
44 Heater core
44a Door
48 Evaporator
70 HVAC

## Claims

1. An air conditioning device (1) for a vehicle, comprising:
a first water-refrigerant heat exchanger (11) that exchanges heat between a refrigerant of low-temperature and low-pressure in a heat pump and an engine coolant flowing in an engine coolant path (19) to vaporize the refrigerant;
a second water-refrigerant heat exchanger (12) that exchanges heat between the refrigerant of high-temperature and high-pressure in the heat pump and the engine coolant to condense the refrigerant; and
a first flow rate adjusting unit (18, 20, 24) that is capable of adjusting a flow rate of the engine coolant supplied to a flow path connecting with the first water-refrigerant heat exchanger (11), and a flow rate of the engine coolant supplied to a flow path bypassing the first water-refrigerant heat exchanger (11);
a control unit (23) that controls the first flow rate adjusting unit (18, 20, 24), **characterised in that**,
the control unit (23) switches the first flow rate adjusting unit (18, 20, 24) to a state where the engine coolant is supplied to a route bypassing the first water-refrigerant heat exchanger (11) when a pressure of the refrigerant of high-temperature and high-pressure discharged from a compressor (38) for compressing and discharging the refrigerant is a predetermined pressure or higher in a heat pump heating mode where the refrigerant of the heat pump is supplied to both the first water-refrigerant heat exchanger (11) and the second water-refrigerant heat exchanger (12).

2. The air conditioning device (1) for a vehicle according to claim 1, wherein the control unit (23) switches the first flow rate adjusting unit (18, 20, 24) to a state where a part of the engine coolant is supplied to the route bypassing the first water-refrigerant heat exchanger (11).

3. The air conditioning device (1) for a vehicle according to claim 2, wherein the control unit (23) allows the first flow rate adjusting unit (18, 20, 24) to increase a flow rate of the engine coolant flowing along the route bypassing the first water-refrigerant heat exchanger (11) in accordance with a rise in the pressure of the refrigerant of high-temperature and high-pressure when the pressure of the refrigerant of high-temperature and high-pressure refrigerant discharged from the compressor (38) is the predetermined pressure or higher.

4. The air conditioning device (1) for a vehicle according to any one of claims 1 through 3, further comprising:
an evaporator (48) that exchanges heat between the refrigerant of low-temperature and low-pressure and intake air to be supplied to a vehicle interior; and
a condenser (39) that receives a flow of the refrigerant of high-temperature and high-pressure, and releases heat from the refrigerant of high-temperature and high-pressure to outside air, wherein
a refrigerant path extending from the second water-refrigerant heat exchanger (12) to the first water-refrigerant heat exchanger (11) is different from a refrigerant path extending from the condenser (39) to the evaporator (48).

5. The air conditioning device (1) for a vehicle according to claim 4, further comprising:
a compressor (38) that compresses the refrigerant; and
a check valve (15) disposed between the compressor (38) and the evaporator in a refrigerant circuit.

6. The air conditioning device for a vehicle according to claim 5, further comprising:
a first expansion unit (14) that expands the refrigerant delivered from the second water-refrigerant heat exchanger (12), and delivers the expanded refrigerant to the first water-refrigerant heat exchanger (11); and
a second expansion unit (12) that expands the refrigerant condensed by the condenser (39), and discharges the expanded refrigerant to the evaporator (48).

## Patentansprüche

1. Klimatisierungsvorrichtung (1) für ein Fahrzeug, die Folgendes umfasst:
einen ersten Wasserkältemittel-Wärmetauscher (11), der Wärme zwischen einem Kältemittel mit niedriger Temperatur und niedrigem Druck in einer Wärmepumpe und einem Kraftmaschinenkühlmittel, das in einem Kraftmaschinenkühlmittelpfad (19) strömt, austauscht, um das Kältemittel zu verdampfen;
einen zweiten Wasserkältemittel-Wärmetauscher (12), der Wärme zwischen dem Kältemittel mit hoher Temperatur und hohem Druck in der Wärmepumpe und dem Kraftmaschinenkühlmittel austauscht, um das Kältemittel zu kondensieren; und
eine erste Durchflussmengen-Einstelleinheit (18, 20, 24), die eine Durchflussmenge des Kraftmaschinenkühlmittels, das einem Strömungspfad zugeführt wird, der mit dem ersten Wasserkältemittel-Wärmetauscher (11) verbunden ist, und eine Durchflussmenge des Kraftmaschinenkühlmittels, das einem Strömungsweg zugeführt wird, der den ersten Wasserkältemittel-Wärmetauscher (11) umgeht, einstellen kann;
eine Steuereinheit (23), die die erste Durchflussmengen-Einstelleinheit (18, 20, 24) steuert,
**dadurch gekennzeichnet, dass**
die Steuereinheit (23) in einer Wärmepumpen-Heizbetriebsart die erste Durchflussmengen-Einstelleinheit (18, 20, 24) in einen Zustand schaltet, in der das Kraftmaschinenkühlmittel einem Weg zugeführt wird, der den ersten Wasserkältemittel-Wärmetauscher (11) umgeht, wenn ein Druck des Kältemittels mit hoher Temperatur und hohem Druck, das von einem Kompressor (38) zum Komprimieren und Auslassen des Kältemittels ausgelassen wird, ein vorgegebener Druck oder höher ist, wobei das Kältemittel der Wärmepumpe sowohl dem ersten Wasserkältemittel-Wärmetauscher (11) als auch dem zweiten Wasserkältemittel-Wärmetauscher (12) zugeführt wird.

2. Klimatisierungsvorrichtung (1) für ein Fahrzeug nach Anspruch 1, wobei die Steuereinheit (23) die erste Durchflussmengen-Einstelleinheit (18, 20, 24) in einen Zustand schaltet, in dem ein Teil des Kraftmaschinenkühlmittels dem Weg zugeführt wird, der den ersten Wasserkältemittel-Wärmetauscher (11) umgeht.

3. Klimatisierungsvorrichtung (1) für ein Fahrzeug nach Anspruch 2, wobei die Steuereinheit (23) der ersten Durchflussmengen-Einstelleinheit (18, 20, 24) erlaubt, eine Durchflussmenge des Kraftmaschinenkühlmittels, das längs des Weges strömt, der den ersten Wasserkältemittel-Wärmetauscher (11) umgeht, in Übereinstimmung mit einem Druckanstieg des Kältemittels mit hoher Temperatur und hohem Druck zu erhöhen, wenn der Druck des Kältemittels mit hoher Temperatur und hohem Druck, das von dem Kompressor (38) ausgelassen wird, der vorgegebene Druck oder höher ist.

4. Klimatisierungsvorrichtung (1) für ein Fahrzeug nach einem der Ansprüche 1 bis 3, die ferner Folgendes umfasst:
einen Verdampfer (48), der Wärme zwischen dem Kältemittel mit niedriger Temperatur und niedrigem Druck und Einlassluft, die dem Fahrzeuginnenraum zugeführt wird, austauscht; und
einen Kondensator (39), der eine Strömung des Kältemittels mit hoher Temperatur und hohem Druck empfängt und Wärme von dem Kältemittel mit hoher Temperatur und hohem Druck an die Außenluft abgibt, wobei
ein Kältemittelpfad, der von dem zweiten Wasserkältemittel-Wärmetauscher (12) zu dem ersten Wasserkältemittel-Wärmetauscher (11) verläuft, von einem Kältemittelpfad, der von dem Kondensator (39) zu dem Verdampfer (48) verläuft, verschieden ist.

5. Klimatisierungsvorrichtung (1) für ein Fahrzeug nach Anspruch 4, die ferner Folgendes umfasst:
einen Kompressor (38), der das Kältemittel komprimiert; und
ein Rückschlagventil (15), das zwischen dem Kompressor (38) und dem Verdampfer in einem Kältemittelkreis angeordnet ist.

6. Klimatisierungsvorrichtung für ein Fahrzeug nach Anspruch 5, die ferner Folgendes umfasst:
eine erste Expansionseinheit (14), die das von dem zweiten Wasserkältemittef-Wärmetauscher (12) gelieferte Kältemittel expandiert und das expandierte Kältemittel an den ersten Wasserkältemittel-Wärmetauscher (11) liefert; und
eine zweite Expansionseinheit (12), die das durch den Kondensator (39) kondensierte Kältemittel expandiert und das expandierte Kältemittel zu dem Verdampfer (48) auslässt.

## Revendications

1. Dispositif de climatisation (1) pour un véhicule comportant :
un premier échangeur de chaleur eau/fluide frigorifique (11) qui échange de la chaleur entre un fluide frigorifique à basse température et basse pression dans une pompe à chaleur et un liquide de refroidissement d'un moteur circulant dans un passage de liquide de refroidissement (19) afin de vaporiser le fluide frigorifique ;
un second échangeur de chaleur eau/fluide frigorifique (12) qui échange de la chaleur entre le fluide frigorifique à haute température et haute pression dans la pompe à chaleur et le liquide de refroidissement du moteur afin de condenser le fluide frigorifique ; et
une première unité de réglage de débit (18, 20, 24) capable de régler un débit du liquide de refroidissement du moteur introduit dans un passage de circulation relié au premier échangeur de chaleur eau/fluide frigorifique (11) et un débit du liquide de refroidissement du moteur introduit dans un passage de circulation contournant le premier échangeur de chaleur eau/fluide frigorifique ;
une unité de commande (23) qui commande la première unité de réglage de débit (18, 20, 24),
**caractérisé en ce que**
l'unité de commande (23) fait basculer la première unité de réglage de débit (18, 20, 24) vers un état dans lequel le liquide de refroidissement du moteur est introduit dans un circuit contournant le premier échangeur de chaleur eau/fluide frigorifique (11) quand une pression du fluide frigorifique à haute température et haute pression sortant d'un compresseur (38) destiné à compresser et évacuer le fluide frigorifique est égale à une pression prédéterminée ou plus, dans un mode de chauffage de la pompe à chaleur dans lequel le fluide frigorifique de la pompe à chaleur est introduit dans le premier échangeur de chaleur eau/fluide frigorifique (11) et dans le second échangeur de chaleur eau/fluide frigorifique (12).

2. Dispositif de climatisation (1) pour un véhicule selon la revendication 1, dans lequel l'unité de commande (23) fait basculer la première unité de réglage de débit (18, 20, 24) vers un état dans lequel une partie du liquide de refroidissement du moteur est introduit dans le circuit contournant le premier échangeur de chaleur eau/liquide de refroidissement (11).

3. Dispositif de climatisation (1) pour un véhicule selon la revendication 2, dans lequel l'unité de commande (23) autorise la première unité de réglage de débit (18, 20, 24) à augmenter un débit du liquide de refroidissement du moteur circulant dans un circuit contournant le premier échangeur de chaleur eau/liquide de refroidissement (11) conformément à une augmentation de la pression du fluide frigorifique à haute température et haute pression quand la pression du fluide frigorifique à haute température et haute pression sortant du compresseur (38) est égale à la pression prédéterminée ou plus.

4. Dispositif de climatisation (1) pour un véhicule selon l'une quelconque des revendications 1 à 3, comportant en outre :
un évaporateur (48) qui échange de la chaleur entre le fluide frigorifique à basse température et basse pression et de l'air d'admission destiné à être introduit dans l'habitacle d'un véhicule ; et
un condensateur (39) qui reçoit un écoulement du fluide frigorifique à haute température et haute pression et libère la chaleur provenant du fluide frigorifique à haute température et haute pression dans l'air extérieur, où
un passage de fluide frigorifique s'étendant du second échangeur de chaleur eau/fluide frigorifique (12) au premier échangeur de chaleur eau/fluide frigorifique (11) est différent d'un passage de fluide frigorifique s'étendant du condensateur (39) à l'évaporateur (48).

5. Dispositif de climatisation (1) pour un véhicule selon la revendication 4, comportant en outre :
un compresseur (38) qui comprime le fluide frigorifique ; et
un clapet anti-retour (15) disposé entre le compresseur (38) et l'évaporateur dans un circuit de fluide frigorifique.

6. Dispositif de climatisation (1) pour un véhicule selon la revendication 5, comportant en outre :
une première unité d'expansion (14) qui dilate le fluide frigorifique fourni par le second échangeur de chaleur eau/fluide frigorifique (12) et fourni le fluide frigorifique dilaté au premier échangeur de chaleur eau/fluide frigorifique (11) ; et
une seconde unité d'expansion (12) qui dilate le fluide frigorifique condensé par le condensateur (39) et évacue le fluide frigorifique condensé vers l'évaporateur (48).
